Europäisches Patentamt

European Patent Office

Office européen des brevets

(11) Publication number: **0 313 217**
**A1**

# EUROPEAN PATENT APPLICATION

(21) Application number: 88308740.5

(22) Date of filing: 21.09.88

(51) Int. Cl.⁴: **F16D 65/32 , F16J 15/16**

The title of the invention has been amended (Guidelines for Examination in the EPO, A-III, 7.3).

(30) Priority: 22.09.87 GB 8722328

(43) Date of publication of application:
26.04.89 Bulletin 89/17

(84) Designated Contracting States:
BE DE ES FR GB IT NL SE

(71) Applicant: **BENDIX LIMITED**
**Douglas Road**
**Kingswood, Bristol BS15 2NL(GB)**

(72) Inventor: **Jennison, Paul**
**4 Dryleaze, Wotton-under-Edge**
**Bristol(GB)**

(74) Representative: **Turner, Alan Reginald**
**BENDIX LIMITED Douglas Road**
**Kingswood, Bristol BS15 2NL(GB)**

(54) **Cylinder assembly, especially for spring-loaded brake actuators.**

(57) A spring brake actuator comprises a cylindrical body member (1) and a head (7) between which and a piston (3) a power spring (8) is retained under compression the head (7) having an internal groove (18) and the head (7) having a flange (19) presenting respective surfaces between which a locating ring (17) is trapped locking the cylindrical body member (1) and head (7) together under the force of the spring (8) and the locating ring (17) is formed of a relatively hard core (21) and substantially enveloping relatively softer outer coating (22) effecting sealing between the head (7) and the cylindrical body member (1).

FIG.2

FIG.3

EP 0 313 217 A1

## Cylinder Assemblies

This invention relates to cylinder assemblies and relates more especially but not exclusively to a spring brake actuator assembly.

A typical compressed air operable actuator assembly comprises a generally cylindrical body with a cylindrical bore within which there is provided a sealingly slideable piston which divides the interior of the body into two chambers. One chamber, as defined between the piston and the closed end of the cylindrical body operates as as pressure chamber for receiving a control pressure signal and another chamber as defined between the piston and a detachable head of the cylindrical body, houses a heavy spring under compression of the piston and the head. In the absence of pressure in the pressure chamber the actuator operates to apply virtually the full force of the spring as applied via the piston to an actuator rod extending out through the closed end of the cylindrical body. However, in such an actuator it is usual to locate the mentioned head by means of an internal circlip which engages an internal peripheral groove milled in the inner end of the cylindrical body the arrangement being such that the circlip can only be inserted or removed when the assembly is placed in a rig to compress the spring and to axially inwardly displace the head in relation to the groove thereby allowing the circlip to be inserted or removed.

The circlip in this type of actuator is usually of spring steel and like the heavy spring within the actuator, it is vulnerable to corrosion in the event of ingress of moisture from the exterior. Vehicle brake actuators are particularly vulnerable in this respect as they are usually mounted beneath the chassis of the vehicle and are subjected to spray from the road surface. Accordingly, it is usual during the assembly process of such actuators to inject the space which surrounds the circlip with a suitable semi-mastic sealant and the use of such mastic or other sealant tends to be messy and to some extent unreliable since it is usual to grease the internal working surfaces before assembly and stray grease can prevent adhesion of the sealant.

An object of the present invention is to provide an improved cylinder assembly wherein it is not necessary to introduce such a sealant during the assembly of the actuator.

According to the present invention there is provided a cylinder assembly comprising a generally cylindrical body member with an open end provided with a closure member or head said members having respective peripheral grooves or annular recesses presenting surfaces between which a locating element is trapped to lock the members together characterised in that said locating element comprises a relatively hard inner core and a substantially enveloping relatively softer coating effecting sealing between the members.

In order that the invention may be more clearly understood and readily carried into effect, the same will be further described by way of example with reference to the accompanying drawing of which:

Fig. 1 illustrates a cut-away view of a typical compressed air operable spring brake actuator,

Fig. 2 illustrates a fragmental sectional view of part of the body member and associated head of the actuator of Fig. 1 on substantially enlarged scale,

Fig. 3 illustrates a section on enlarged scale of a locating ring for the actuator of Fig. 1, and

Figs. 4 and 5 illustrate alternative rings.

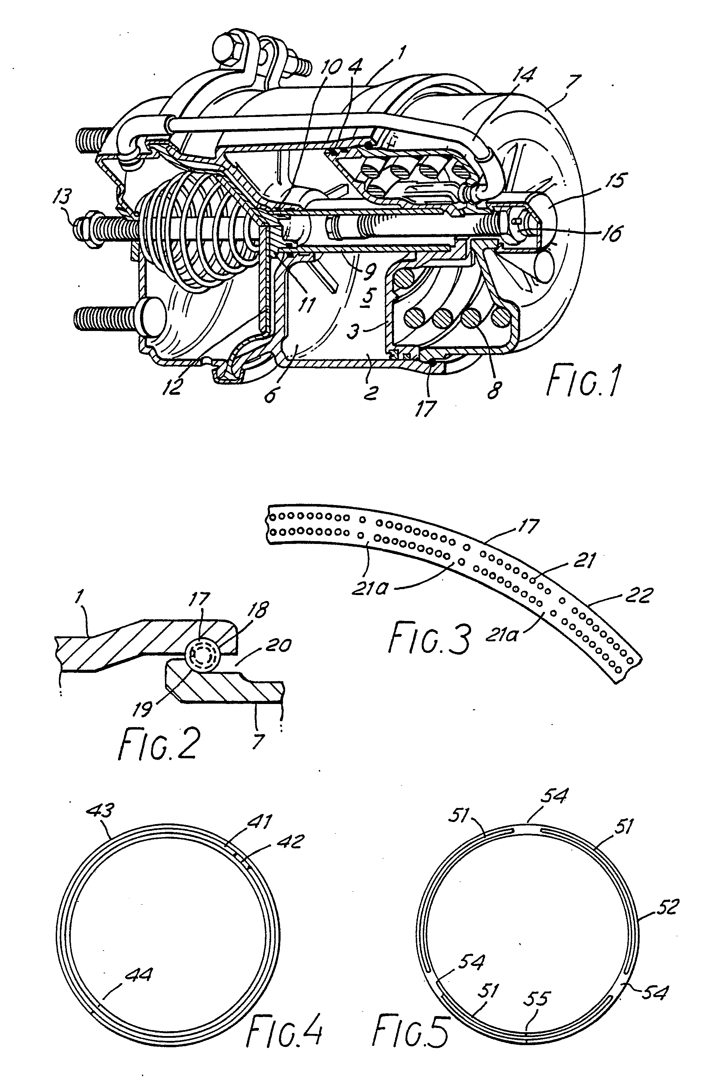

Referring to Fig. 1, the compressed air operable spring brake actuator illustrated therein comprises a generally cylindrical actuator body denoted by reference 1, having a cylindrical bore 2 within which a piston 3 with a peripheral seal 4 is sealingly slideable. The piston 4 divides the cylindrical body into a first pressure chamber 5 defined between the piston 3 and a closed end 6 of the body and a second non-pressure chamber defined between the piston 3 and a head 7 which closes the opposite open end of the cylinder. Trapped between the piston 3 and the head 7 there is a heavy compressed spring denoted by reference 8 and the piston has a tubular output rod 9 which extends through a seal 10 in the closed end 6 to act via a pressure pad 11 against a diaphragm 12 which in its turn acts via a push plate onto the output rod 13 of the actuator. The diaphragm 12 comprises a separately operable actuator portion which is operable by compressed air being applied to a separate compressed air input port (not shown) whereby with the spring 8 in the compressed condition shown, the brakes can be applied independently thereof to provide normal service braking. This is a well known arrangement and will not be described in greater detail herein. In the interests of completeness, however, the drawing of Fig. 1 does show the various other features of such an actuator and these include a breather pipe 14 which connects the non-pressure chamber of the spring brake portion to the non-pressure chamber of the service brake portion. Furthermore, the actuator head 7 is provided with a so-called closure cap denoted by reference 15 removal of which gives access to a so-called wind-off bolt 16 which is normally screwed fully inwards of the head 7 as shown but can be screwed outwards in order to engage the tubular rod 9 and thereby enable manual release of the output force of the spring brake portion of the actuator when a compressed air signal is not available to the chamber 5.

In the arrangement shown in Fig. 1 the head 7 is retained in the cylindrical body against the effect of the force of the spring 8 by means of an annular locating ring member 17 which is trapped in a locking position between opposed annular surfaces of the body 1 and the head 7 whereby the head 7 cannot be removed without first compressing the head 7 inwardly of the cylindrical housing to separate the surfaces and permit release of the annular member 17. Referring to Fig. 2, this shows the way in which the locating member 17 is trapped between respective surface provided by grooves or recesses of the head and cylindrical member. In the case of Fig. 2, the cylindrical body member 1 is provided with a peripheral internal groove denoted by reference 18 and the head is provided with a peripheral flange 19 which presents an annular surface against which the locating ring 17 is engageable. By compressing the head axially inward of the cylindrical body 1, a smaller diameter portion 19 moves into the plane of the ring to enable the ring to be compressed inwards to permit removal thereof.

Referring to Fig. 3, the ring 17 is constructed of moulded vulcanised rubber as an 'O' ring but embedded therein there is a helical wire core which by virtue of suitable spaces 21a between turns of the helix is sufficiently compressable to reduce the circumference of the ring to permit insertion and removal from the groove 18. By virtue of the locating ring comprising a relatively hard inner core 21 embedded in a substantially enveloping coat of rubber 22 when the actuator is assembled, the forces acting on the locating ring 17 are as indicated by arrows in Fig. 2 and sealing is thereby effected between the head member 7 and the cylindrical body 1.

In an alternative embodiment of the invention, the helical core 21 may not necessarily be embedded in the material of the coat but could merely be provided with a tubular sheath of such material.

In yet another example, the relatively hard inner core, the strength of which is designed safely and securely to support the head in the body portion against the action of the heavy spring may be formed of a wire 41 typically of mild steel, provided with a small gap 42 and inserted within a resilient tubular sheath 43 the ends of which are in close abutment as seen at 44. The gap 42 permits resilient reduction of the circumference of the ring to enable insertion thereof into the groove 18 of an actuator body 1 as described above with reference to Figs. 1 and 2.

In yet another embodiment, the ring of Fig. 5 is provided with a plurality of arcuate lengths of mild steel wire 51 similarly inserted within a resilient tubular sheath 52 thereby affording three spaces such as 54 the ends of the tube abutting at 55. Such an arrangement provides greater resilience facility insertion of the ring into the groove 18 of the cylindrical housing.

Although the present invention has been described with reference to an arrangement wherein the head is located within the cylindrical body, for some applications it may be required to locate the rim of the head around the cylindrical body. In that case, the groove in which the locating ring is first positioned would be provided within the rim of the head.

Although in the foregoing examples the resilient and relatively soft material oi the locking rings is preferably rubber, any sufficiently resilient plastic material may be employed which is sufficiently deformable under compression to both permit installation and to effect the requisite seal between the cylindrical body and the closure member. Again, it is to be appreciated that the thickness of the resulting relatively softer coat around the locking ring is preferably no more than is necessary to effect such sealing whilst not impairing the rigidity of the locking effect of the core of the ring between the annular surfaces.

## Claims

1. A cylinder assembly comprising a generally cylindrical body member (1) with an open end provided with a closure member or head (7) said members having respective peripheral grooves or annular recesses presenting surfaces (18, 19) between which a locating element (17) is trapped to lock the members together characterised in that said locating element comprises a relatively hard inner core (21; 41; 51) and a substantially enveloping relatively softer coating (22; 43; 52) effecting sealing between the members.

2. A cylinder assembly as claimed in claim 1 characterised in that said core comprises a spiral wound helical wire core (21) with spaces between at least some of its turns permitting circumferential extension or compressibility during assembly.

3. A cylinder assembly as claimed in claim 1, characterised in that said core comprises a one-piece wire core (41) with a gap (42) permitting circumferential extension or compressibility during assembly.

4. A cylinder assembly as claimed in claim 1 characterised in that said core comprises a plurality of wire lengths (51) with spaces (52) there between permitting circumferential extension or compressibility during assembly.

5. A cylinder assembly as claimed in claim 1, 2, 3 or 4 characterised in that said core is embedded in the material of said coating.

6. A cylinder assembly as claimed in claim 1, 2, 3 or 4 characterised in that said coating is a tube within which the core is inserted.

FIG.1

FIG.2

FIG.3

FIG.4

FIG.5

## DOCUMENTS CONSIDERED TO BE RELEVANT

EP 88308740.5

| Category | Citation of document with indication, where appropriate, of relevant passages | Relevant to claim | CLASSIFICATION OF THE APPLICATION (Int. Cl.4) |
|---|---|---|---|
| Y | GB - A - 1 440 511 (BENDIX WESTINGHOUSE LTD) <br> * Fig. * | 1,2,3, 4,5,6 | F 16 D 65/32 <br> F 16 J 15/16 |
| Y | DE - B2 - 2 361 004 (BENDIX WESTINGHOUSE LTD) <br> * Fig. 1 * | 1,2,3, 4,5,6 | |
| Y | AT - B - 43 690 (THEODOR EWALD) <br> * Fig. 1,3 * | 1,4,5 | |
| Y | DE - B - 1 205 349 (CENTRE DE RECHERCHES DE PONT-A-MOUSSON) <br> * Fig. 13,14,15 * | 1,2 | |
| Y | DE - A - 1 775 541 (KUPFER-ASBEST- CO GUSTAV BACH) <br> * Claim 25 * | 1,2 | TECHNICAL FIELDS SEARCHED (Int. Cl.4) |
| Y | DE - A - 1 920 437 (REINZ-DICHTUNGS- GMBH) <br> * Fig. 1 * | 1,3,6 | F 16 D 65/00 <br> F 16 J 15/00 |

The present search report has been drawn up for all claims

| Place of search | Date of completion of the search | Examiner |
|---|---|---|
| VIENNA | 14-12-1988 | KAMMERER |